# EUROPEAN PATENT SPECIFICATION

(11) **EP 3 528 672 B1**
(45) Date of publication and mention of the grant of the patent: **26.10.2022**
(21) Application number: 17804365.9
(22) Date of filing: 01.11.2017
(51) Int. Cl.: A47J 31/06

(54) **FLOW-OPTIMIZED POUR OVER COFFEE BREWING SYSTEM**
FLUSSOPTIMIERTES POUR-OVER-KAFFEEBRÜHSYSTEM
SYSTÈME D'INFUSION DE CAFÉ À VERSEMENT PAR LE DESSUS À ÉCOULEMENT OPTIMISÉ

(30) Priority: 02.11.2016 US 201662416643 P
(43) Date of publication of application: 28.08.2019
(73) Proprietor: Société des Produits Nestlé S.A., 1800 Vevey (CH)
(72) Inventor: KUEMPEL, Jeremy John, Brisbane, California 94005 (US); LEDESMA, Christopher William, Arcadia, California 91007 (US); CARLSON, Thomas Drew, Oakland, California 94611 (US); DAY, JR., Neil M., Portola Valley, California 94028 (US)
(74) Representative: Vossius & Partner Patentanwälte Rechtsanwälte mbB
(86) International application number: PCT/US2017/059591
(87) International publication number: WO 2018/085446

(56) References cited:
- DE-A1- 2 160 607
- DE-B- 1 197 061
- DE-B1- 2 609 606
- DE-C- 652 010
- FR-A- 751 732

## Description

### CROSS-REFERENCE TO RELATED APPLICATION(S)

This application claims priority to U.S. Provisional Patent Application No. 62/416,643 filed on November 2, 2016.

### BACKGROUND

The invention herein relates to a pour-over coffee dripper.

Coffee drinks are popular beverages enjoyed in various parts of the world, hot or cold. Coffee drinks have a wide range of taste and flavors depending on factors such as origin and type of coffee beans, roasting technique used, and the brewing method used. Each of these factors can have a significant impact on the flavor and aroma of the resulting coffee drink. For example, even using beans from one batch, using different brewing methods can produce coffee drinks that taste very different.

One of the brewing techniques that are available involves using a pour-over dripper ("dripper"). To brew a cup of coffee using a dripper, a filter is usually placed in the container that is generally shaped like a cup or bowl, coffee grounds are placed in the filter, and water is poured over the coffee grounds. The coffee flavors get extracted from the coffee grounds into the water with optimal contact time, and the flavored water is drained out of the dripper into a cup.

The dripper offers the advantage of allowing one cup of coffee to be made at a time, in addition to ease of cleaning that comes with simplicity of design (i.e., few parts or components). Furthermore, some users may find the experience of watching his coffee get brewed right on the table enjoyable and relaxing.
A liquid dripper according to the preamble of claim 1 is disclosed in DE 26 09 606 B1, DE 652 010 C, FR 751 732 A or DE 11 97 061 B. DE 21 60 607 A1 discloses a liquid dripper comprising ribs on the base extending towards a ring.

While there are several different coffee drippers on the market today made with different designs and materials, each product has its disadvantage. A dripper that will allow optimal extraction for improved flavor and aroma in the resulting drink is desired.

### SUMMARY

The invention pertains to a liquid dripper that is useful for making coffee. The liquid dripper includes a container having a first opening and a second opening of different sizes and a sidewall extending between the first opening and the second opening. Ridges are formed on an inside surface of the sidewall extending in straight lines between the first opening and the second opening.

### BRIEF DESCRIPTION OF THE DRAWINGS

FIG. 1 is a perspective view of the dripper according to one embodiment.
FIG. 2 is a side view of the dripper according to one embodiment.
FIG. 3 is a cross-sectional side view of the dripper according to one embodiment.
FIG. 4 is a top view of the dripper according to one embodiment.
FIG. 5 is a top view of the dripper with a filter placed inside, according to one embodiment.
FIG. 6 is a bottom view of the dripper according to one embodiment.
FIG. 7 depicts the dripper with the filter inside placed on a cup in accordance with one embodiment.

### DETAILED DESCRIPTION

The invention pertains to a pour-over coffee dripper with a container that is optimized for water flow and heat retention that contribute to improved aroma and flavor of the resulting drink.

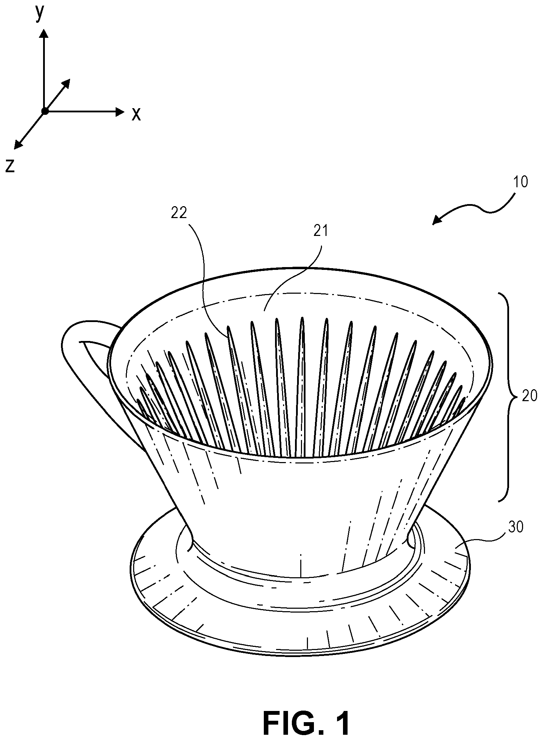

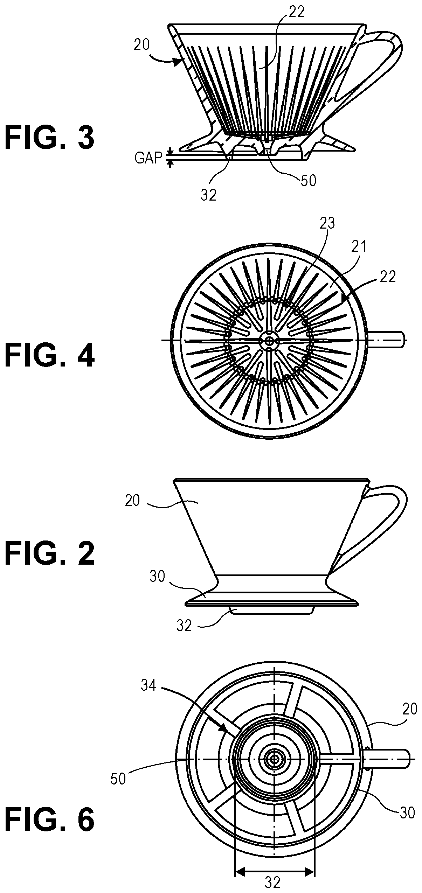

FIG. 1 is a perspective view of a dripper 10 according to one embodiment. As shown, the dripper 10 has a container portion 20 attached to a base 30. In the particular embodiment, the container portion 20 has a first opening at the top that is useful for pouring liquid into the container portion 20 and a second opening through which the liquid exits the container portion 20. The second opening is formed in a bottom surface of the container portion 20 and is of a different size than the first opening. In the embodiment that is shown, the fist opening is larger than the second opening. The first opening and the bottom surface, in this particular example, lie in planes that are parallel to the x-z plane referring to the coordinates of FIG. 1. A sidewall 21 extends between the first opening and the bottom surface 23 (bottom surface 23 is shown in FIG. 4). In the particular embodiment shown, the first opening and the bottom surface 23 are both circular; however, this is not a limitation of the inventive concept. Ridges 22 are formed on the inside surface of the sidewall. The ridges 22 protrude inward from the sidewall 21 and extend in a straight line between the first opening and the second opening while following the contours of the sidewall 21.

In one embodiment, the dripper 10 is made of porcelain. More specifically, the dripper 10 may be manufactured using a material that can be made thin, provides for heat retention and low thermal mass while maintaining overall strength of the product. One example of a suitable material is a high-grade porcelain that is unique to the Kyushu region of Japan. This porcelain material is fired at an ultra-high temperature (> 1300 °C) that results in a high level of durability. Firing the dripper at an ultra-high temperature also creates a smooth glaze which may reduce friction and improve fluid flow through the dripper 10.

In one embodiment, the container 20 is sized for a 350 mL cup. For example, the inner diameter at the top rim of the container 20 may be about 110 mm, the length of the slanted inner wall may be about 70 mm, and the inner diameter at the bottom of the container 20 may be about 47 mm. The shapes and measurements provided here are not intended to be limiting of the disclosure, and are just provided as an example. The inner dimensions may be optimized for a filter that is intended to be used with the dripper 10. In one embodiment, the weight of the dripper 10 does not exceed 290 g.

FIG. 2 is a side view of the dripper 10. In the particular embodiment, the sidewall 21 of the container 20 is set at about 65.7° with respect to a vertical axis (not shown) orthogonal to the bottom surface 23 of the container 20. Any angle between 60-70° helps precise visual estimation of pour volume. While wider wall angles may be conducive to nicer flow property during a pour, a deeper/narrower wall angle is easier for certain pour techniques, such as a multiple-pour technique. A base 30 extends outward from an outer surface of the sidewall 21. The sidewall 21 extends past the base 30 to form an inner ring 32, such that the first opening and the inner ring 32 are on different sides of the base 30. The second opening is connected to a nozzle 50, which is surrounded by the inner ring 32. The nozzle 50 may be at a center of the inner ring 32.

FIG. 3 is a cross-sectional side view of the dripper 10 according to one embodiment. There may be a gap between a bottom of the inner ring 32 and the bottom of the nozzle 50 to ensure that the nozzle 50 does not come into contact with items or surfaces around it, such as a table surface. This gap preserves a sanitary zone. The gap may be about 3 mm high in the y-direction, although this is not a limitation of the inventive concept.

The cross-section view shows that the nozzle 50 does not have a constant diameter. The nozzle 50 is wider at the top, and narrows toward the outlet. At the narrowest point, the nozzle 50 may have a diameter of about 4 - 4.5 mm to provide for optimal flow rate and even extraction. The bottom of the container 20 is not flat but has a gradual slope down to the nozzle 50 to help the liquid flow. The shape and dimensions of the nozzle 50 ensure laminar flow profile of the liquid for smooth and consistent flowrate that contributes to a consistent extraction and flavor profile from cup to cup.

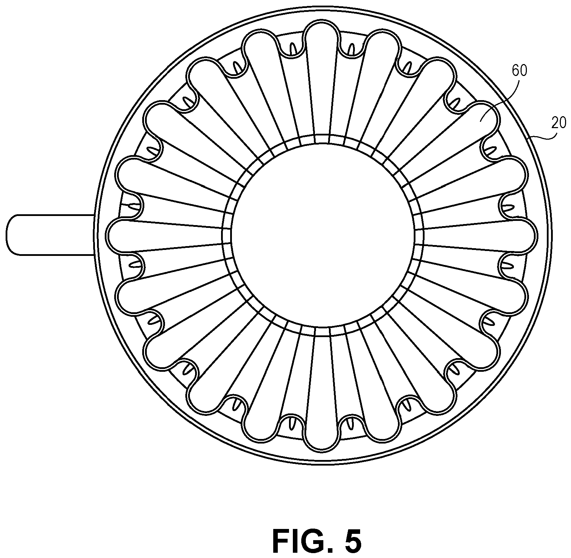

FIG. 4 is a top view of the dripper 10 according to one embodiment. As shown, there are ridges 22 formed on the inner wall of the container 20. The ridges 22 utilize capillary action to draw coffee across the filter. In the particular embodiment, there are 40 vertical ridges formed, making this dripper 10 usable with a filter that has 20 pleats. FIG. 5 depicts a top view of the container 20 with a filter 60 placed inside. Often, the filter medium is flavor-tuned to optimally brew coffee without pre-wetting. Not pre-wetting the filter allows the capillary zone to fill during bloom and reduces early drip-out.

FIG. 6 is a bottom view of the dripper 10 according to one embodiment. In this embodiment, there are five support ribs 34 extending from the outer edge of the base 30 toward the inner ring 32 to provide even support and balance on most carafes or cups. The diameter of the inner ring 32 is about the same as the diameter of the bottom of the container 20, or around 47 mm in one embodiment. A relatively small inner ring diameter allows the dripper 10 to sit comfortably on even a small vessel and let the liquid flow into the vessel.

The ridges 22 extend in a straight line between an area near the rim of the container 20 and the bottom of the container 20. In fact, the ridges 22 follow the slope, angle, and curve of where the sidewall meets the bottom, and extend onto the bottom surface of the container 20. All the ridges 22 extend toward the nozzle 50, but are of varying lengths. In the particular embodiment, there are four longest ridges 22 that are formed about 90° apart from one another, with ridges 22 of different lengths between them. Some of the ridges 22 extend only to where the bottom surface meets the sidewall, partly due to the limited real estate with the decrease in diameter in going from the rim to the bottom surface.

The ridges 22 protrude from the sidewall 21 inward, and are not of constant thickness or height, "height" being measured by how much it protrudes from the flat portion of the inner surface. Referring back to FIG. 4, the ridges 22 are higher and wider at the bottom of the container close to the second openin, and get narrower and shallower as they extend toward the first opening.

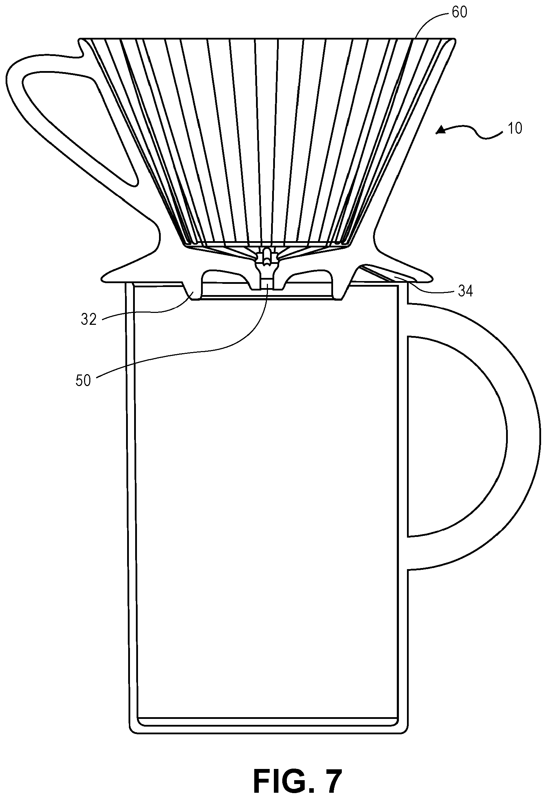

FIG. 7 depicts the dripper 10 with the filter 60 inside placed on a cup in accordance with one embodiment. As shown, the support ribs 34 rest securely on the wall of the cup, while liquid flows out of the nozzle 50 into the cup without encountering any obstructions.

## Claims

1. A liquid dripper (10) comprising:
a container (20) having a first opening and a second opening of different sizes;
a sidewall (21) connecting the first opening to the second opening; and
ridges (22) formed on an inside surface of the sidewall and extending in straight lines between the first opening and the second opening,
**characterized in that**
the ridges (22) grow thicker as they approach the second opening.

2. The liquid dripper of claim 1 further comprising a bottom surface in a plane parallel to a plane of the first opening, wherein the second opening is formed in the bottom surface.

3. The liquid dripper of claim 2, wherein the sidewall (21) is slanted with respect to the bottom surface such that an area of the first opening is larger than an area of the bottom surface in parallel planes.

4. The liquid dripper of claim 3 further comprising a base (30) extending out of an outside surface of the sidewall (21) such that a portion of the sidewall (21) forms an inner ring (32), wherein the first opening is on one side of the base (30) and the inner ring (32) is on the other side of the base (30).

5. The liquid dripper of claim 4, wherein the second opening forms a nozzle (50) through which liquid exits the container (20), and wherein the nozzle (50) extends from the bottom surface less than the inner ring (32).

6. The liquid dripper of claim 4 further comprising ribs (34) formed on the base (30) and extending toward the inner ring (32).

7. The liquid dripper of claim 1, wherein the ridges (22) are formed on the entire inside surface of the sidewall (21) and have different lengths.

8. The liquid dripper of claim 7, wherein the container (20) has a circular cross section and the ridges (22) comprise four longest ridges that are positioned about 90-degrees apart from one another.

9. The liquid dripper of claim 7, wherein some of the ridges (22) extend from an area near the first opening to the bottom surface.

## Patentansprüche

1. Flüssigkeitstropfer (10), umfassend:
einen Behälter (20), der eine erste Öffnung und eine zweite Öffnung unterschiedlicher Größen aufweist;
eine Seitenwand (21), die die erste Öffnung mit der zweiten Öffnung verbindet; und
Grate (22), die an einer Innenfläche der Seitenwand ausgebildet sind und sich in geraden Linien zwischen der ersten Öffnung und der zweiten Öffnung erstrecken,
**dadurch gekennzeichnet, dass**
die Grate (22) dicker werden, wenn sie sich der zweiten Öffnung nähern.

2. Flüssigkeitstropfer nach Anspruch 1, ferner umfassend eine Bodenfläche in einer Ebene parallel zu einer Ebene der ersten Öffnung, wobei die zweite Öffnung in der Bodenfläche ausgebildet ist.

3. Flüssigkeitstropfer nach Anspruch 2, wobei die Seitenwand (21) in Bezug auf die Bodenfläche derart geneigt ist, dass eine Fläche der ersten Öffnung größer als eine Fläche der Bodenfläche in parallelen Ebenen ist.

4. Flüssigkeitstropfer nach Anspruch 3, ferner umfassend ein Unterteil (30), das sich aus einer Außenfläche der Seitenwand (21) erstreckt, sodass ein Abschnitt der Seitenwand (21) einen Innenring (32) bildet, wobei sich die erste Öffnung auf einer Seite des Unterteils (30) befindet und sich der Innenring (32) auf der anderen Seite des Unterteils (30) befindet.

5. Flüssigkeitstropfer nach Anspruch 4, wobei die zweite Öffnung eine Düse (50) bildet, durch die Flüssigkeit aus dem Behälter (20) austritt, und wobei sich die Düse (50) von der Bodenfläche weniger als der Innenring (32) erstreckt.

6. Flüssigkeitstropfer nach Anspruch 4, ferner umfassend Rippen (34), die auf dem Unterteil (30) ausgebildet sind und sich in Richtung des Innenrings (32) erstrecken.

7. Flüssigkeitstropfer nach Anspruch 1, wobei die Grate (22) auf der gesamten Innenoberfläche der Seitenwand (21) ausgebildet sind und unterschiedliche Längen aufweisen.

8. Flüssigkeitstropfer nach Anspruch 7, wobei der Behälter (20) einen kreisförmigen Querschnitt aufweist und die Grate (22) vier längste Grate umfassen, die um 90 Grad voneinander entfernt positioniert sind.

9. Flüssigkeitstropfer nach Anspruch 7, wobei sich einige der Grate (22) von einem Bereich nahe der ersten Öffnung zu der Bodenfläche erstrecken.

## Revendications

1. Goutteur de liquide (10) comprenant :
un récipient (20) ayant une première ouverture et une seconde ouverture de tailles différentes ;
une paroi latérale (21) reliant la première ouverture à la seconde ouverture ; et
des crêtes (22) formées sur une surface intérieure de la paroi latérale et s'étendant en lignes droites entre la première ouverture et la seconde ouverture,
**caractérisé en ce que**
les crêtes (22) croissent plus épaisses alors qu'elles se rapprochent de la seconde ouverture.

2. Goutteur de liquide selon la revendication 1, comprenant en outre une surface inférieure dans un plan parallèle à un plan de la première ouverture, dans lequel la seconde ouverture est formée dans la surface inférieure.

3. Goutteur de liquide selon la revendication 2, dans lequel la paroi latérale (21) est inclinée par rapport à la surface inférieure de sorte qu'une zone de la première ouverture soit plus grande qu'une zone de la surface inférieure dans des plans parallèles.

4. Goutteur de liquide selon la revendication 3, comprenant en outre une base (30) s'étendant hors d'une surface extérieure de la paroi latérale (21) de telle sorte qu'une partie de la paroi latérale (21) forme une bague intérieure (32), dans lequel la première ouverture est sur un côté de la base (30) et la bague intérieure (32) est de l'autre côté de la base (30).

5. Goutteur de liquide selon la revendication 4, dans lequel la seconde ouverture forme une buse (50) à travers laquelle du liquide sort du récipient (20), et dans lequel la buse (50) s'étend de la surface inférieure moins que la bague intérieure (32).

6. Goutteur de liquide selon la revendication 4 comprenant en outre des nervures (34) formées sur la base (30) et s'étendant vers la bague intérieure (32).

7. Goutteur de liquide selon la revendication 1, dans lequel les crêtes (22) sont formées sur toute la surface intérieure de la paroi latérale (21) et ont des longueurs différentes.

8. Goutteur de liquide selon la revendication 7, dans lequel le récipient (20) a une section transversale circulaire et les crêtes (22) comprennent quatre crêtes les plus longues qui sont positionnées à environ 90 degrés les unes des autres.

9. Goutteur de liquide selon la revendication 7, dans lequel certaines des crêtes (22) s'étendent à partir d'une zone proche de la première ouverture jusqu'à la surface inférieure.
